# EUROPÄISCHE PATENTSCHRIFT

(11) **EP 3 491 234 B1**
(45) Veröffentlichungstag und Bekanntmachung des Hinweises auf die Patenterteilung: **01.07.2020**
(21) Anmeldenummer: 17730141.3
(22) Anmeldetag: 14.06.2017
(51) Int. Cl.: F03B 1/02, F03B 11/04

(54) **LAUFRAD FÜR EINE PELTON-TURBINE**
RUNNER FOR A PELTON TURBINE
ROUE À AUBES POUR TURBINE PELTON

(30) Priorität: 01.08.2016 DE 102016214126
(43) Veröffentlichungstag der Anmeldung: 05.06.2019
(73) Patentinhaber: Voith Patent GmbH, 89522 Heidenheim (DE)
(72) Erfinder: MACK, Reiner, 89547 Dettingen (DE)
(74) Vertreter: Voith Patent GmbH - Patentabteilung
(86) Internationale Anmeldenummer: PCT/EP2017/064525
(87) Internationale Veröffentlichungsnummer: WO 2018/024393

(56) Entgegenhaltungen:
- EP-A1- 2 014 386
- EP-A1- 2 947 271
- GB-A- 2 405 186
- US-A- 5 820 348

## Beschreibung

Die vorliegende Erfindung betrifft ein Laufrad für eine Pelton-Turbine.

Die Becher eines Laufrades für eine Pelton-Turbine werden beim Betrieb durch den Strahleingriff zyklisch belastet. Lastwechsel in der Größenordnung von 10⁸ bis 10¹⁰ sind für geplante 50 Jahre Lebensdauer keine Seltenheit. Darüber hinaus erfährt der Becher auch noch eine Belastung durch das Eigenschwingverhalten der Becher selbst. Da die Dämpfung des Materials und des durchströmenden Wassers relativ gering ist, kommt es im Resonanzfall zu Amplituden der Oberschwingung die teilweise sogar höher sind als die des Strahleingriffs. Während des Designs kann die Eigenfrequenz der Becher entsprechend unkritisch eingestellt werden, so dass die Harmonischen der Frequenz, mit der der Strahl die Becher passiert, weit genug von der Eigenfrequenz der Becher entfernt liegen. Allerdings können geringfügige Änderungen während des Fertigungsprozesses eine Verschiebung der Eigenfrequenz der Becher verursachen, so dass der im Design verankerte Sicherheitsabstand zwischen den genannten Frequenzen verringert wird. Siehe hierzu die Veröffentlichung R. Mack, C. Probst: "Evaluation of the dynamic behaviour of a Pelton runner based on strain gauge measurements" (Proceedings of the IAHR 2016 Grenoble).

Der Erfinder hat sich die Aufgabe gestellt, ein gattungsgemäßes Laufrad anzugeben, das hinsichtlich der geschilderten Situation bzgl. einer Anregung der Eigenfrequenz der Becher weniger empfindlich ist und somit eine erhöhte Sicherheit gegenüber ungewollten Resonanzeffekten aufweist.

Erfindungsgemäß wird diese Aufgabe durch ein Laufrad mit den Merkmalen des unabhängigen Anspruchs 1 gelöst. Weitere vorteilhafte Ausgestaltungen des erfindungsgemäßen Laufrades ergeben sich aus den abhängigen Unteransprüchen.

Der Erfinder hat sich von dem Gedanken leiten lassen, das gattungsgemäße Laufrad im Bereich der Becher mit Hohlräumen auszustatten, welche Mittel umschließen, die einer Becherschwingung entgegenwirken. Die genannten Mittel können dabei die Wirkweise einer Dämpfung oder einer zur Becherschwingung gegenphasigen Bewegung aufweisen.

Turbinenblätter mit Hohlräumen sind beispielsweise aus US 5 820 348 bekannt.

Die erfindungsgemäßen Lösungen werden nachfolgend anhand von Figuren erläutert. Darin ist im Einzelnen folgendes dargestellt:
- Figur 1: Becher eines erfindungsgemäßen Laufrades in einer ersten Ausführungsform;
- Figur 2: Becher eines erfindungsgemäßen Laufrades in einer zweiten Ausführungsform.

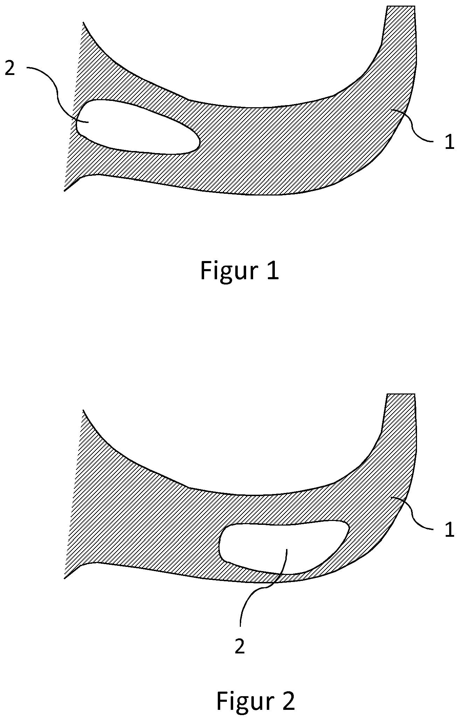

Figur 1 zeigt im Schnitt einen stark schematisierten Becher eines erfindungsgemäßen Laufrades in einer ersten Ausführungsform. Dabei ist der Becher mit 1 bezeichnet. Ein solcher Becher ist mit der Laufradnabe über die sogenannten Becherwurzeln verbunden. Im Wurzelbereich des dargestellten Bechers befindet sich ein Hohlraum, welcher mit 2 bezeichnet ist. Der Hohlraum 2 umschließt Mittel, welche die Funktion haben, einer Becherschwingung entgegenzuwirken. Diese Mittel sind in Figur 1 nicht dargestellt.

Der Erfinder hat erkannt, dass bei einer schädlichen Becherschwingung im Bereich der Becherwurzel eine Verformung auftritt. Wenn in diesem Bereich die Dämpfung erhöht wird, so kann der Becherschwingung wirksam entgegengewirkt werden. Die Mittel in Hohlraum 2 müssen daher eine dämpfende Wirkung haben. Der Erfinder hat erkannt, dass solche Mittel aus beweglichen Körpern bestehen können, die bei der Verformung der Becherwurzel aneinander reiben und so eine wirksame Dämpfung einbringen. Geeignete bewegliche Körper können z.B. aus einem Granulat, aus Metallpulver oder sonstigen Formen bestehen, die gegeneinander reiben können. Zusätzlich kann der Hohlraum noch mit einer Flüssigkeit gefüllt werden. Die Verwendung einer Flüssigkeit mit hoher Viskosität kann die Dämpfung weiter verstärken. Außerdem können sich in Bereich der Becherwurzel mehr als ein Hohlraum befinden. Es ist klar, dass die Hohlräume so dimensioniert sein müssen, dass die strukturelle Festigkeit der Becherwurzeln ausreichend hoch bleibt. Ein Hohlraum kann auch aus mehreren einzelnen Kammern bestehen. Diese Kammern können einen wabenartigen Aufbau haben. Die Verwendung von mehreren Kammern bzw. ein wabenartiger Aufbau bietet die Vorteile, dass die strukturelle Festigkeit der Becherwurzel nicht zu stark reduziert wird, und dass die beweglichen Körper sich nicht in einem Teil des Hohlraumes absetzen. Es ist klar, dass bei einem Aufbau mit mehreren Kammern bzw. Waben sich in jeder Kammer bzw. Wabe mehrere der beweglichen Körper befinden.

Figur 2 zeigt im Schnitt einen stark schematisierten Becher eines erfindungsgemäßen Laufrades in einer zweiten Ausführungsform. Dabei ist der Becher mit 1 bezeichnet. Im Bereich der Rückseite des Bechers befindet sich ein Hohlraum, welcher mit 2 bezeichnet ist. Der Hohlraum 2 umschließt Mittel, welche die Funktion haben, einer Becherschwingung entgegenzuwirken. Diese Mittel sind in Figur 2 nicht dargestellt.

Der Erfinder hat erkannt, dass bei einer schädlichen Becherschwingung im Bereich der Rückseite des Bechers eine periodische Auslenkung auftritt. In diesem Bereich kann der Becherschwingung dadurch entgegengewirkt werden, dass dort ein beweglicher Körper in den Hohlraum 2 integriert wird, welcher durch den Strahleingriff zu einer zur Becherschwingung gegenphasigen periodischen Bewegung angerecht werden kann. Es ist von Vorteil, wenn der bewegliche Körper eine möglichst große Masse besitzt. Der bewegliche Körper kann in eine Flüssigkeit eingebettet sein.

Die erfindungsgemäßen Ausführungsformen gemäß Figur 1 und Figur 2 können auch in Kombination verwendet werden, d.h. jeder Becher hat sowohl einen Hohlraum im Bereich der Becherwurzel und im Bereich der Rückseite des Bechers.

Im Prinzip ist auch denkbar, dass die Hohlräume Mittel umschließen, die aktiv einer Becherschwingung entgegenwirken. Aktiv wirkende Mittel würden eine geeignete Regelung und eine Energiequelle erfordern. Da dies jedoch für viele Fälle als nicht praktikabel erscheint, ist die vorliegende Erfindung explizit auf Mittel beschränkt, die passiv wirken. Passive Elemente haben zudem den Vorteil, dass sie robust gegenüber Defekten sind, wodurch eine dauerhafte Wirksamkeit gewährleistet wird.

Im Prinzip ist auch denkbar, dass die Hohlräume der zweiten Ausführungsform nicht am Becherrücken sondern einem anderen Bereich des Bechers lokalisiert sind, welcher ausreichend weit von der Becherwurzel entfernt ist. Da der Becherrand jedoch dünn ausläuft und strukturell stärker belastet ist, scheint eine Anordnung in diesem Bereich nicht praktikabel zu sein. Dasselbe gilt für die Becherinnenseiten. Somit bleibt der Becherrücken als einziger geeigneter Ort für die zweite Ausführungsform.

Die erfindungsgemäßen Ausführungsformen können mit Hilfe eines geeigneten 3D-Druckverfahrens hergestellt werden.

## Patentansprüche

1. Verfahren zur Herstellung eines Laufrades für eine Pelton-Turbine umfassend eine Laufradnabe und eine Vielzahl von Bechern (1) mit je einer Becherwurzel, wobei jeder Becher (1) mittels der Becherwurzel an der Laufradnabe befestigt ist, wobei jeder Becher einen Hohlraum (2) umfasst, welcher Mittel umschließt, die so ausgestaltet sind, dass sie einer auftretenden Becherschwingung passiv entgegenwirken, wobei die Mittel wenigstens einen bezüglich des Hohlraumes (2) beweglichen Körper umfassen, und wobei das Laufrad mit Hilfe eines 3D-Druckverfahrens hergestellt wird.

2. Verfahren nach Anspruch 1, wobei der Hohlraum (2) im Bereich der Becherwurzel angeordnet ist, und der Hohlraum (2) mehrere bewegliche Körper umschließt, die so ausgebildet sind, dass die Körper durch Reibung aneinander eine Dämpfung einer auftretenden Becherschwingung bewirken.

3. Verfahren nach Anspruch 1, wobei der Hohlraum (2) im Bereich des Becherrückens angeordnet ist, und der Hohlraum (2) genau einen beweglichen Körper umschließt, welcher so ausgebildet ist, dass er in eine periodische Bewegung versetzt werden kann, wobei die periodische Bewegung gegenphasig zu einer auftretenden Becherschwingung ist.

4. Verfahren nach Anspruch 2, wobei die die beweglichen Körper aus einem Granulat oder aus Metallpulver bestehen.

5. Verfahren nach einem der Ansprüche 2 oder 4, wobei der Hohlraum (2) in mehrere Kammern untereilt ist, wobei jede Kammer mehrere der beweglichen Körper umschließt.

6. Verfahren nach einem der Ansprüche 2 oder 4, wobei der Hohlraum (2) einen wabenartigen Aufbau hat, wobei jede Wabe mehrere der beweglichen Körper umschließt.

7. Verfahren nach Anspruch 3, wobei der bewegliche Körper eine möglichst hohe Masse besitzt.

8. Verfahren nach einem der vorangehenden Ansprüche, wobei der Hohlraum (2) zusätzlich mit einer Flüssigkeit gefüllt ist.

9. Verfahren nach Anspruch 8 in Verbindung mit einem der Ansprüche 2, 4, 5 oder 6, wobei die Flüssigkeit eine hohe Viskosität aufweist.

## Claims

1. Method for producing a runner for a Pelton turbine, comprising a runner hub and a multiplicity of buckets (1) with in each case one bucket root, wherein each bucket (1) is fastened to the runner hub by means of the bucket root, wherein each bucket comprises a hollow space (2) which encloses means which are of such a form that they passively counteract any bucket vibration which occurs, wherein the means comprise at least one body which is movable in relation to the hollow space (2), and wherein the runner is produced with the aid of a 3D printing process.

2. Method according to Claim 1, wherein the hollow space (2) is arranged in the region of the bucket root, and the hollow space (2) encloses multiple movable bodies which are of such a form that, by rubbing against one another, the bodies cause any bucket vibration which occurs to be damped.

3. Method according to Claim 1, wherein the hollow space (2) is arranged in the region of the back of the bucket, and the hollow space (2) encloses exactly one movable body which is of such a form that it can be set in periodic motion, wherein the periodic motion is in antiphase with any bucket vibration which occurs.

4. Method according to Claim 2, wherein the movable bodies consist of granules or of metal powder.

5. Method according to either of Claims 2 and 4, wherein the hollow space (2) is subdivided into multiple chambers, wherein each chamber encloses a plurality of the movable bodies.

6. Method according to either of Claims 2 and 4, wherein the hollow space (2) has a honeycomb-like structure, wherein each honeycomb encloses a plurality of the movable bodies.

7. Method according to Claim 3, wherein the movable body has as high a mass as possible.

8. Method according to one of the preceding claims, wherein the hollow space (2) is additionally filled with a liquid.

9. Method according to Claim 8 in conjunction with one of Claims 2, 4, 5 or 6, wherein the liquid has a high viscosity.

## Revendications

1. Procédé de fabrication d'une roue à aubes pour une turbine Pelton comprenant un moyeu de roue à aubes et une pluralité d'augets (1) présentant chacun un pied d'auget, chaque auget (1) étant fixé au moyeu de roue à aubes au moyen du pied d'auget, chaque auget comprenant une cavité (2) qui entoure des moyens conçus de telle sorte qu'ils s'opposent de manière passive à une oscillation de l'auget qui se produit, les moyens comprenant au moins un corps mobile par rapport à la cavité (2), et la roue à aubes étant fabriquée à l'aide d'un procédé d'impression 3D.

2. Procédé selon la revendication 1, dans lequel la cavité (2) est agencée dans la zone du pied d'auget, et la cavité (2) entoure plusieurs corps mobiles conçus de telle sorte que les corps réalisent, par frottement les uns sur les autres, un amortissement d'une oscillation de l'auget qui se produit.

3. Procédé selon la revendication 1, dans lequel la cavité (2) est agencée dans la zone du dos de l'auget, et la cavité (2) entoure exactement un corps mobile conçu de telle sorte qu'il puisse être déplacé en un mouvement périodique, le mouvement périodique étant en opposition de phases à une oscillation de l'auget qui se produit.

4. Procédé selon la revendication 2, dans lequel les corps mobiles sont constitués par un granulat ou par une poudre métallique.

5. Procédé selon l'une quelconque des revendications 2 ou 4, dans lequel la cavité (2) est divisée en plusieurs chambres, chaque chambre entourant plusieurs des corps mobiles.

6. Procédé selon l'une quelconque des revendications 2 ou 4, dans lequel la cavité (2) a une structure alvéolaire, chaque alvéole entourant plusieurs des corps mobiles.

7. Procédé selon la revendication 3, dans lequel le corps mobile présente une masse aussi élevée que possible.

8. Procédé selon l'une quelconque des revendications précédentes, dans lequel la cavité (2) est en outre remplie avec un liquide.

9. Procédé selon la revendication 8 en connexion avec l'une des revendications 2, 4, 5 ou 6, dans lequel le liquide présente une viscosité élevée.
